Europäisches Patentamt

European Patent Office

Office européen des brevets

(19)

(11) Veröffentlichungsnummer : **0 481 338 B1**

(12) **EUROPÄISCHE PATENTSCHRIFT**

(45) Veröffentlichungstag der Patentschrift :
**16.08.95 Patentblatt 95/33**

(51) Int. Cl.[6] : **H01M 6/22, H01M 10/26**

(21) Anmeldenummer : **91117173.4**

(22) Anmeldetag : **09.10.91**

(54) **Alkalischer Elektrolyt für galvanische Elemente.**

(30) Priorität : **18.10.90 DE 4033102**

(43) Veröffentlichungstag der Anmeldung :
**22.04.92 Patentblatt 92/17**

(45) Bekanntmachung des Hinweises auf die
Patenterteilung :
**16.08.95 Patentblatt 95/33**

(84) Benannte Vertragsstaaten :
**DE ES FR GB SE**

(56) Entgegenhaltungen :
EP-A- 0 383 161
DE-C- 279 911
FR-A- 787 259
FR-A- 1 122 574
FR-A- 2 204 050
FR-A- 2 363 206
GB-A- 2 053 947
US-A- 2 180 839
US-A- 2 629 758

(56) Entgegenhaltungen :
CHEMICAL ABSTRACTS, Band 95, 1981, Seite
508, Zusammenfassung Nr. 122987j, Columbus, Ohio, US
PATENT ABSTRACTS OF JAPAN, Band 007,
Nr. 284 (E-217), 17. Dezember 1983
DATABASE WPIL, AN=79-79994B (44), Derwent Publications Ltd, London, GB
PATENT ABSTRACTS OF JAPAN, Band 007,
Nr. 239 (E-206), 25. Oktober 1983
PATENT ABSTRACTS OF JAPAN, Band 13, Nr.
38 (E-709)(3386), 27. Januar 1989

(73) Patentinhaber : **VARTA Batterie
Aktiengesellschaft
Postfach 5 40,
Am Leineufer 51
D-30405 Hannover (DE)**

(72) Erfinder : **Fritz, Heinz P., Prof. Dr.
Königsberger Strasse 17
W-8046 Garching (DE)**
Erfinder : **Frässdorf, Heinz
Theaterstrasse 59/60
W-8300 Landshut (DE)**

(74) Vertreter : **Kaiser, Dieter Ralf, Dipl.-Ing.
Gundelhardtstrasse 72
D-65779 Kelkheim (DE)**

EP 0 481 338 B1

**Beschreibung**

Die Erfindung betrifft einen alkalischen Elektrolyten für galvanische Elemente, der Zusätze von Substanzen mit Gelier- oder Adsorptionsvermögen enthält.

Das Anwendungsgebiet der Erfindung erstreckt sich auf alkalische Primär- und Sekundärelemente, für deren Elektrolyt aus Gründen der Betriebssicherheit eine Festlegung wünschenswert ist. Es ist dabei nicht auf bestimmte Batteriesysteme vom alkalischen Typ beschränkt und umfaßt u. a. auch Brennstoffzellen.

In der Regel arbeiten alle diese Elemente mit einem alkalischen Elektrolyten auf der Grundlage des $KOH/H_2O$-Systems. Bei z. B. $H_2$/Luft-Brennstoffzellen oder Metall/Luft-Elementen liegt wegen des unvermeidlichen Zutritts von $CO_2$ aus der Umgebungsluft rasch eher ein $KOH/K_2CO_3/KHCO_3/H_2O$-Elektrolytsystem vor, weswegen bei alkalischen Systemen normalerweise auf Luft ($CO_2$)-Ausschluß geachtet werden muß.

Während sich saure Elektrolyte wie $H_2SO_4/H_2O$ durch gelierfähige Substanzen wie $SiO_2$, allenfalls auch durch $Al_2O_3$, $TiO_2$ oder Zeolithe immobilisieren lassen, sind diese anorganischen Stoffe zum Festlegen alkalischer Elektrolyte ungebräuchlich, da aufgrund ihrer sowohl basischen wie sauren Eigenschaften nicht ausgeschlossen werden kann, daß sie sich in einem alkalischen Milieu auflösen. Im Falle des $TiO_2$ beispielsweise spricht die einschlägige Literatur einmal für (vgl. Gmelins Handbuch der anorganischen Chemie (8. Auflage), Verlag Chemie, Weinheim 1951, Ti 41, S. 255), ein anderes Mal gegen dessen Beständigkeit in wässerigen Alkalihydroxiden (vgl. Cotton-Wilkinson: Anorganische Chemie, Weinheim 1985, S. 709).

Soweit man sich nicht auf eine Menge an Kalium- oder Natriumhydroxidlösung beschränken will, die für den Akkumulatorenbetrieb gerade ausreicht und allein von dem Porensystem der Elektroden und des Separators durch Kapillarwirkung festgehalten werden kann, sind es in alkalischen Zellen durchweg gelierfähige organische Stoffe, mit denen eine Festlegung des Elektrolyten erreicht wird. Beispiele aus der Praxis sind Carboxymethylcellulose, Kartoffelstärke, Alginate, Lignin, lösliche Harze, Polyvinylalkoholderivate oder Verbindungen, die durch Hydrolyse oder Verseifung einen Polyvinylalkohol ergeben.

Bei Verwendung solcher Verdicker besteht während Standzeiten oder in Entladephasen der Zelle die Gefahr einer Absonderung von Elektrolytflüssigkeit aus dem Gel. Große Mengen an Gelierungsmittel können diesen Prozeß u. U. aufhalten, sind aber der US-PS 4 332 870 zufolge auch Ursache dafür, daß die Ionenleitfähigkeit des Elektrolyten zurückgeht bzw. der Ionenwiderstand der Zelle wächst. Als Abhilfe wird in der gleichen Druckschrift neben dem Gelierungsmittel - hier ein Stärke-Produkt mit hydrophiler Seitenkette - der gleichzeitige Zusatz eines mehrwertigen Alkohols vorgeschlagen, durch welchen eine Homogenisierung des Elektrolyten erreicht werden soll. Dabei soll dem gut wasserlöslichen Alkohol die Rolle eines Bindemittels zwischen dem pulverförmigen Anodenmetall, z. B. Zink, und dem Gelierungsmittel zukommen und letzteres durch Absorption von Wasser in situ gelifizieren, wobei in dem gebildeten Gel die Metallpartikel gleichmäßig verteilt sind.

Der DE-OS 27 36 578 läßt sich entnehmen, daß durch Trocknen eines Copräzipitats von $Co(OH)_2$, $Cd(OH)_2$ und $Mg(OH)_2$ ein gelierfähiges Pulver erhalten wird, welches als Additiv benutzt werden und im Elektrolyten einer alkalischen Zink-Sekundärzelle als Quelle für Cobalt- und Cadmiumionen eingesetzt werden kann, um in diesem Fall durch Mitabscheidung dieser Metalle die Zinkabscheidung an bevorzugten Wachstumsplätzen seines Kristallgitters zu stören und damit ein dendritisches Wachstum zu verhindern. Dem Magnesiumhydroxid fällt dabei nur die Rolle eines Trägers oder Streckmittels zu.

Aus GB-A-2053947 ist es bekannt, Separatoren für galvanische Elemente mit alkalischen Elektrolyten herzustellen, wobei als Füllmaterial Titandioxid Verwendung findet.

Der Erfindung liegt die Aufgabe zugrunde, für alkalische Elektrolyte, die wegen der hohen Energie- und Leistungsdichte alkalischer Batterien interessant sind, Mittel zur Immobilisierung verfügbar zu machen.

Die Aufgabe wird erfindungsgemäß mit einem alkalischen Elektrolyten gelöst, wie er durch den Patentanspruch 1 definiert ist.

Danach hat sich überraschenderweise oberflächenreiches Titan(IV)-oxid (Rutil) als ein brauchbarer Elektrolytträger erwiesen, welcher unter den Betriebsbedingungen alkalischer Zellen stabil bleibt.

Die spezifische Oberfläche eines erfindungsgemäßen Titan(IV)-oxids kann, von $10 m^2/g$ ausgehend, $200 m^2/g$ erreichen. Sie ist jedoch bei $50\ m^2/g$ bereits sehr günstig.

Dies zeigen die nachstehend beschriebenen Versuche, bei denen zwei $TiO_2$-Produkte (A und B) verschiedener Herkunft eingesetzt wurden, nämlich:

(A): Produktbez.: "P 25", Bezugsquelle Degussa, 6000 Frankfurt/Main, chemisch rein, spez. Oberfläche: $50\ m^2/g$.

(B): Artikel-Nr. 89490, Bezugsquelle Fa. Fluka AG, CH-9470 Buchs; Reinheit > 99%, spez. Oberfläche: $8.5\ m^2/g$.

Zur Herstellung des immobilisierten Elektrolyten gemäß der Erfindung wurde jeweils 1 g eines Produkts A oder B mit einem Volumen zwischen 0,5 und 4,5 ml wässeriger, 30 Gew.-%iger Kalilauge oder Kaliumcarbonatlösung gemischt. Die resultierenden Proben, je nach Mischungsverhältnis von trockener bis naß-pastöser Konsistenz, wurden einer 1-tägigen "Reifung" überlassen, nochmals gerührt und darauf elektrischen Widerstandsmessungen unterzogen. Dabei wurde im Temperaturintervall von - 70 bis + 70 °C die Impedanz im Frequenzbereich 0.1 - $10^5$ Hz gemessen, der reine Ohm'sche Widerstand im Frequenzbereich von $1*10^3$ bis $1*10^5$ Hz bestimmt.

Tabelle 1 gibt für 4 Ausführungsbeispiele einen Überblick.

## Tabelle 1

| Probe | Produkt | spez. Oberfläche (m²/g) | ml 30Gew.-%ige Lösung/g KOH | Produkt K₂Co₃ | $\kappa_{RT}$ (S/cm) | Konsistenz |
|-------|---------|---------|------|------|------|------|
| 1 | (B) | 8.5 | 1.5 | --- | 0.184 | sehr naß |
| 2 | (A) | 50 | 1.5 | --- | 0.302 | klumpig, fest |
| 3 | (A) | 50 | 4.0 | --- | 0.366 | sehr naß |
| 4 | (A) | 50 | --- | 4.0 | 0.177 | sehr naß |

Danach wirkt sich eine Steigerung der spezifischen Oberfläche des Trägers positiv auf die Proben im Sinne einer Erhöhung der spezifischen Leitfähigkeit $\kappa$ aus, da sie eine größere Aufnahmekapazität an Elektrolyten mit sich bringt, was sich augenfällig in einer unterschiedlichen Konsistenz der Proben niederschlägt. Dies zeigt sich deutlich beim. Vergleich der Proben 1, 2 und 3: Das sehr oberflächenreiche $TiO_2$-Produkt (A) mit einer 6fach größeren spezifischen Oberfläche als beim $TiO_2$-Produkt (B) bleibt bei Aufnahme der gleichen Elektrolytmenge von 1,5 ml im wesentlichen trocken, während sich seine spezifische Leitfähigkeit $\kappa$ um mehr als das 1,5fache erhöht. Dank seiner großen spezifischen Oberfläche vermag das Produkt (A) 4 ml Elektrolyt zu binden, bis es die gleiche, sehr nasse Konsistenz des Produkts (B) mit nur 1,5 ml Elektrolyt erreicht. Dabei wächst die Leitfähigkeit weiter bis auf den doppelten Betrag von Probe 1.

Das Elektrolytvolumen spielt, wie Tabelle 1 zeigt, nur eine untergeordnete Rolle.

Neben diesem Zahlenhintergrund wurde für das Elektrolytsystem $KOH/H_2O$ außerdem gefunden, daß sich der Pastenelektrolyt temperaturstabil verhält und in einem Temperaturbereich von - 50 °C bis nahe an den Siedepunkt des reinen Elektrolyten einsetzen läßt.

Um einen direkten Vergleich zu den Meßkurven mit Feststoffzusätzen zu ermöglichen, wurden Meßdaten der spezifischen Leitfähigkeit $\kappa$ für einen reinen KOH-Elektrolyten über einen weiten Temperaturbereich ermittelt und in einer Figur exemplarisch denen eines mit $TiO_2$ verfestigten Elektrolyten gegenübergestellt.

Es bedeuten in der Figur: Kurve a = gemessene Werte für reine 30 Gew.%ige $KOH/H_2O$; Kurve b = gemessene Werte für Pastenelektrolyt (4,0 ml 30 Gew.%ige $KOH/H_2O$ pro g $TiO_2$(A)).

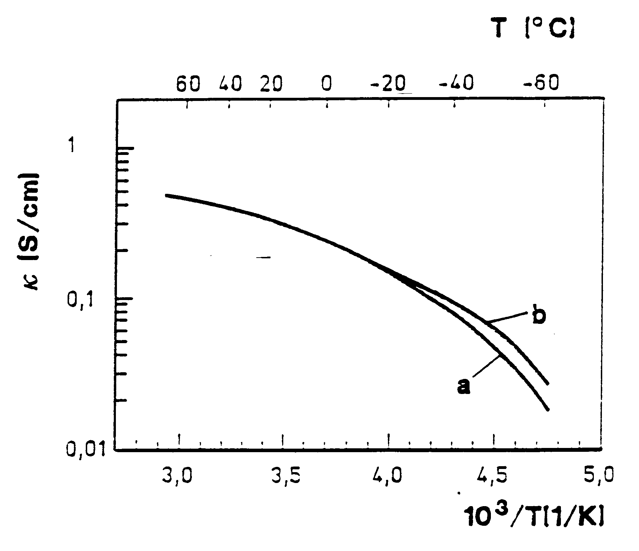

Bei diesen Untersuchungen zeigte sich, daß der Zusatz von $TiO_2$ als Matrix nur einen geringen negativen Einfluß, bei tiefen Temperaturen sogar einen leicht positiven Einfluß - wie aus Figur 1 ersichtlich - auf die Leitfähigkeit des alkalischen Elektrolyten hat.

Im großen und ganzen liegen die spezifischen Leitfähigkeiten des freien Elektrolyts und des Pastenelektrolyts jedoch dicht beieinander, denn es wurde gefunden $\kappa_{RT}$ = 0,374 S/cm für 30 Gew.%ige $KOH/H_2O$ und $\kappa_{RT}$ = 0,366 S/cm für den Pastenelektrolyten (4,0 ml 30 Gew.%ige $KOH/H_2O$ pro g $TiO_2$(A)).

Aus Angaben der Überführungszahl $t(OH^-)$ - merklich größer als 0.7 nach Falk und Salkind ("Alkaline Storage Batteries", J.Wiley & Sons, New York (1969), 593; siehe auch E. M. Zhurenkov et al. Zh. Prikl. Khim. (Leningrad), **48**(4), 789 (1975)) darf geschlossen werden, daß überwiegend Hydroxid-Ionen die ladungstransportierende, mobile Spezies bilden.

In verschiedenen Zeitabständen mehrmals vermessene Pastenelektrolytproben zeigten innerhalb von 90 Tagen keine Änderung von $\kappa$. Daraus läßt sich folgern, daß zum einen eine sehr kurze "Reifungsperiode" zur vollständigen Adsorption des Elektrolyten durch Kapillarkräfte ausreicht [vgl. F. M. Delnick et al., J. Electrochem. Soc. **137** 11 (1990)] und zum anderen der immobilisierte Elektrolyt über einen längeren Lagerungszeitraum beständig ist.

Im übrigen kann auch die in der Literatur (vgl. z.B. Cotton-Wilkinson : Anorganische Chemie (4. Auflage), Verlag Chemie, Weinheim, 1985, 709 ff) vereinzelt postulierte Titanatbildung aufgrund des Fehlens der charakteristischen Ti-O-Linien in den jeweils gleichzeitig aufgenommenen Raman-Spektren ausgeschlossen werden.

Aus Tabelle 2 geht hervor, daß die spezifische Leitfähigkeit mit größer werdendem Elektrolytvolumen, d. h. bei Übergang von schüttfähigen über pastenartige bis hin zu fließfähigen Produkten, wächst.

Tabelle 2

| ml 30 Gew.% KOH/H$_2$O pro g TiO$_2$ (A) | Konsistenz der Proben | $\kappa_{RT}$(S/cm) |
|---|---|---|
| 1.50 | sehr klumpig | 0.302 |
| 1,75 — | klumpig | 0.325 |
| 2.00 | sehr zäh | 0.358 |
| 2.25 | zäh | 0.348 |
| 2.50 | feucht | 0.341 |
| 2.75 | feucht | 0.351 |
| 3.00 | sehr feucht | 0.361 |
| 3.25 | sehr feucht | 0.381 |
| 3.50 | naß | 0.371 |
| 4.00 | sehr naß | 0.366 |
| 4.50 | flüssig | 0.377 |

Hier bewirkt eine Verdreifachung des Elektrolytanteils nur eine Steigerung der spezifischen Leitfähigkeit um den Faktor 1,25. Es fällt also, wie bereits weiter vorn zu Tabelle 1 bemerkt, bei dem Produkt (A) wegen seiner größeren Oberfläche der Einfluß des Elektrolytvolumens auf die Leitfähigkeit weniger ins Gewicht.

Bei der Abhängigkeit von $\kappa$ von der Elektrolytkonzentration findet sich das Optimum wie beim reinen Elektrolyten, d. h. auch bei den Pastenelektrolyten ist ein Anteil von 30 Gew.-% an KOH anzustreben.

Zur Konsistenz der Proben sei angemerkt, daß eine quantifizierende Festlegung bisher nicht gelang, so daß hier nur phänomenologisch der Übergang zwischen gerade "zusammenklumpend" bis deutlich "naß" angegeben wird.

Der grundlegende Vorteil der Erfindung besteht darin, daß nunmehr auch Nickel/Cadmium- und gegebenenfalls auch Nickel/Eisen-Akkumulatoren in ihren klassischen und neueren Varianten sowie alkalische Brennstoffzellen mit festgelegtem Elektrolyt herstellbar sind. Dabei lassen diese aufgrund der gefundenen spezifischen Leitfähigkeiten für den immobilisierten Elektrolyt in der Größenordnung von $\kappa > 10^{-1}$ S/cm hohe Leistungsdaten erwarten. Die erfindungsgemäßen Elektrolyte lassen sich leicht herstellen und, da volumetrisch dosierbar, leicht verarbeiten. Sie eignen sich besonders für die Miniaturisierung von Zellen, da sie in dünnen Schichten ohne zusätzliche Separation verwendet werden können. Sie haben eine gewisse mechanische Festigkeit, die evtl. Dendritenwachstum behindert und erlauben trotzdem den Ausgleich von Volumenschüben ohne Kontaktverlust an Anode und Kathode im Gegensatz zu harten Festkörperionenleitern (Li$_3$N, Li$_4$SiO$_4$).

**Patentansprüche**

1. Alkalischer Elektrolyt für galvanische Elemente, der Zusätze von Substanzen mit Gelier- oder Adsorptionsvermögen enthält, dadurch gekennzeichnet, daß der Elektrolyt durch einen Zusatz von Titan IV-oxid mit hoher spezifischer Oberfläche, jedoch ohne Verwendung einer zusätzlichen Separation, immobilisiert und von pastenförmiger Konsistenz ist.

2. Alkalischer Elektrolyt nach Anspruch 1, dadurch gekennzeichnet, daß die spezifische Oberfläche des Titan(IV)-oxids zwischen 10 und 200 m$^2$/g, vorzugsweise um 50 m$^2$/g, beträgt.

3. Alkalischer Elektrolyt nach den Ansprüchen 1 und 2, dadurch gekennzeichnet, daß er durch Mischen des Titan(IV)-oxids mit Kalilauge oder wässeriger Alkalicarbonatlösung in Gewichtsverhältnissen zwischen ca. 1 : 1,5 und 1 : 4,5 gebildet ist.

EP 0 481 338 B1

**Claims**

1. Alkaline electrolyte for galvanic cells, which contains additions of substances with a gelling or adsorptive capacity, characterised in that the electrolyte is immobilised by an addition of titanium (IV) oxide with a large specific surface but without the use of an additional separation, and is of pasty consistency.

2. Alkaline electrolyte according to claim 1, characterised in that the specific surface of the titanium (IV) oxide is between 10 and 200 $m^2/g$, preferably 50 $m^2/g$.

3. Alkaline electrolyte according to claims 1 and 2, characterised in that it is formed by mixing the titanium (IV) oxide with potassium hydroxide solution or aqueous alkali carbonate solution in weight ratios between approx. 1:1.5 and 1:4.5.

**Revendications**

1. Electrolyte alcalin pour éléments galvaniques, qui contient des additifs de substances ayant des capacités de gélification ou d'absorption, électrolyte caractérisé en ce qu'il est immobilisé et amené à une consistance pâteuse par une adjonction d'oxyde IV de titane de surface spécifique élevée, et est mis en oeuvre sans utiliser une séparation supplémentaire.

2. Electrolyte alcalin selon la revendication 1 caractérisé en ce que la surface spécifique de l'oxyde IV de titane se situe entre 10 et 200 $m^2/g$, et est de préférence de 50 $m^2/g$.

3. Electrolyte alcalin selon les revendications 1 et 2 caractérisé en ce qu'il est formé par mélange de l'oxyde IV de titane avec une lessive de potasse ou bien une solution aqueuse de carbonate alcalin selon des rapports de poids entre environ 1 : 1,5 et 1 : 4,5.

5